# EUROPEAN PATENT SPECIFICATION

(11) **EP 2 983 859 B1**
(45) Date of publication and mention of the grant of the patent: **20.06.2018**
(21) Application number: 13727980.8
(22) Date of filing: 12.04.2013
(51) Int. Cl.: B23Q 1/01, B23Q 1/52, B23Q 3/06

(54) **MACHINING CENTRE WITH VERTICAL SUPPORT FOR LONG AND FLEXIBLE WORKPIECES**
BEARBEITUNGSZENTRUM MIT VERTIKALTRÄGER FÜR LÄNGLICHE BIEGSAME WERKSTÜCKE
CENTRE D'USINAGE COMPORTANT UN SUPPORT VERTICAL POUR DES PIÈCES À USINER LONGUES ET FLEXIBLES

(30) Priority: 10.04.2013 IT PD20130092
(43) Date of publication of application: 17.02.2016
(73) Proprietor: Promac S.r.l., 30030 Salzano (VE) (IT)
(72) Inventor: CARRARO, Lucio, I-30030 Salzano (VE) (IT)
(74) Representative: Vinci, Marcello
(86) International application number: PCT/IB2013/052916
(87) International publication number: WO 2014/167385

(56) References cited:
- EP-B1- 1 472 031
- WO-A1-2012/038064
- DE-C- 933 124
- FR-A1- 2 407 048

## Description

The present patent concerns the sector of NC machines for machining workpieces and in particular it concerns NC machines for machining long and flexible workpieces of the type known from patent document FR 2 407 048. NC machining centers are known that comprise a support or table on which the workpiece is blocked, an electric spindle on which the tool is assembled, translation and rotation systems suited to allow the tool to machine all sides of the workpiece blocked on the support and with any angle.

Suitable programmable electronic circuits control all the movements of the machining centers, like for example the tool rotation speed, the translation and/or rotation of the support or table on which the workpiece to be machined is blocked, the translation and/or rotation of the spindle.

The machining centers made up in this way are commonly called CNC machining centers, that is, with computerized numerical control.

The CNC machining centers used at present are suited to machine workpieces with large horizontal dimensions and limited vertical dimensions.

Some pieces requiring the precise machining ensured by a CNC center have a high ratio between the length in one direction and the lateral dimensions in the two directions orthogonal to said length.

Said rough pieces resulting from previous rough processing are fixed to the support or table in horizontal position, with their ends fixed to centering spindles that rotate them on their horizontal major axis.

The cross section of these types of workpieces on the vertical plane is usually such that it is not affected by vertical flexure due to the weight of the workpiece or the pressure of the tool.

Some types of workpieces, like for example impeller blades, are considerably long compared to their limited or flat cross section.

While they are machined in CNC machining centers, in which they are arranged in horizontal position and rotated on their horizontal major axis, said long workpieces with very limited or flat cross section are affected by their own weight and, partially, by the tool pressure.

Said flexure of the workpiece, mainly due to the dead load of the workpiece itself, does not guarantee precise machining of the workpiece corresponding to the shapes, sizes and tolerances required.

In order to overcome all the above mentioned drawbacks, a new machining center with vertical support for long and flexible workpieces has been designed and manufactured.

One object of the invention is to provide a new machining center that ensures precise machining of workpieces having a considerable length compared to their cross section which is extremely small and/or flat.

It is another object of the present invention to provide a new machining center that allows said workpieces to be machined precisely without undergoing any flexure due to their own weight.

These and other direct and complementary objects are achieved by the new machining center with vertical support for long and flexible workpieces. The new machining center comprises a bearing structure-frame that supports the various other parts, a lower plane or support, an upper support, an electric spindle.

The lower plane or support consists of a horizontal surface provided with elements or mechanisms suited to hold the lower end of the workpiece.

Said lower plane or support is hinged to the lower part or base of the bearing structure-frame.

In particular, said lower plane or support and the related elements or mechanisms are suited to support and hold the larger end of the workpiece. Said lower plane or support is provided with one or more mechanisms suited at least to rotate it around the vertical axis.

The upper support is constituted by an element provided with elements or mechanisms suited to hold the upper end of the workpiece.

Said upper support is arranged in the top and centered position with respect to said lower plane or support, is suited to rotate on its central axis coinciding with the vertical rotation axis of the lower plane or support.

Said upper support is provided with devices or mechanisms suited to translate it vertically in such a way as to allow its vertical position to be adapted with respect to the lower plane or support depending on the length of the workpieces.

Said upper support, exactly like the lower plane or support, can be provided with one or more mechanisms suited to rotate it around the vertical axis.

The mechanisms for rotating the lower plane or support and the mechanisms for rotating the upper support are operated and rotate in a synchronous way so as to avoid any twist between the upper portion and the lower portion of the workpiece.

The electric spindle consists of a spindle provided with jaws or couplings suited to hold and rotate a machining tool, typically the bit of a milling machine.

Said electric spindle is fixed and hinged to a system of moving arms suited to support said electric spindle on said structure-frame as well as to translate and rotate said electric spindle on the main axes.

According to the invention, said moving arms system:
- translates the electric spindle horizontally;
- translates the electric spindle vertically;
- traslates the electric spindle longitudinally;
- rotates the electric spindle around a horizontal axis that is orthogonal to the rotation axis of the tool,
and also performs a movement that is a combination of some or all of said movements.

There is a tool crib suited to contain tools and provide the electrical spindle with the tool that is necessary from time to time for the specific type of machining needed.

All the moving members are controlled by a programmable electronic circuit, typically a computer, suited to detect the position of each member in addition to controlling the movement and/or rotation of each member.

The new machining center constituted as described above allows the machining of flexible and elongated workpieces.

In fact, as the workpiece is mounted and held vertically between the lower plane or support and the upper support, its weight is discharged axially with respect to the workpiece itself without causing any flexure of the latter.

The upper support and the lower plane or support are rotated at the same time and in a synchronous way, rotating the workpiece in its entirety. Consequently, for the duration of the machining operation the workpiece is not subjected to twisting.

The characteristics of the new machining center are highlighted in greater detail in the following description, with reference to the attached drawings that are enclosed by way of non-limiting example.

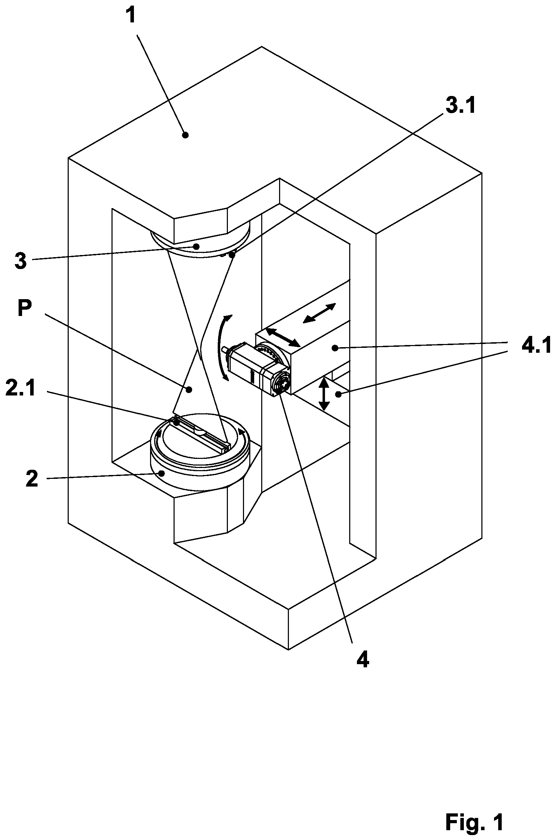

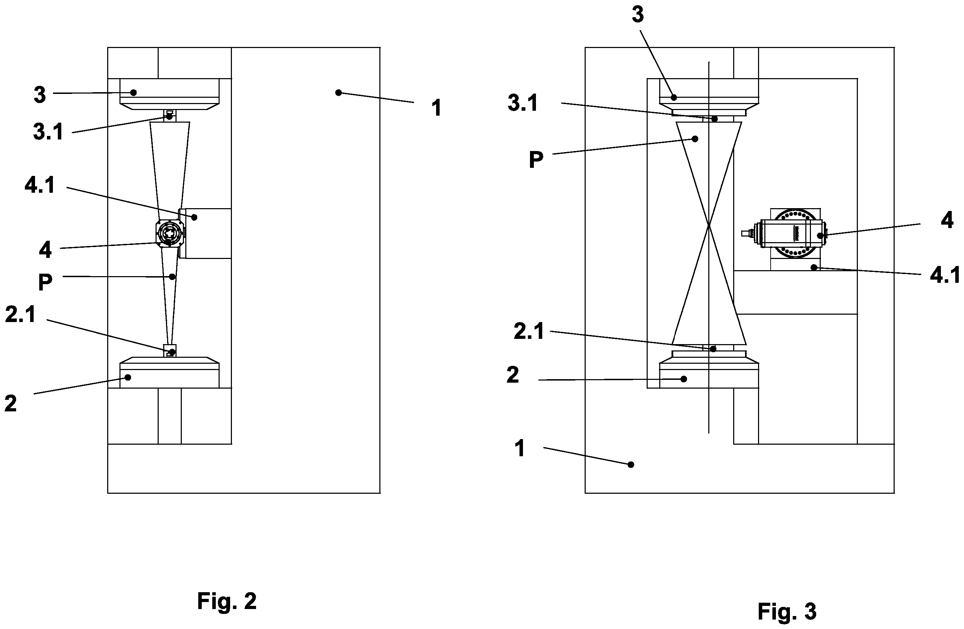

Figures 1, 2, 3 show three views of the new machining center.

The new machining center comprises a bearing structure-frame (1) that supports the various other parts, a lower plane or support (2), an upper support (3), an electric spindle (4).

The lower plane or support (2) is constituted by a horizontal plane provided with elements or mechanisms (2.1) suited to hold the lower end of the workpiece (P).

Said lower plane or support (2) is hinged to the lower part or base of the bearing structure-frame (1) and is provided with mechanisms suited to rotate it around the vertical axis.

In particular, said lower plane or support (2) and the related elements or mechanisms are suited to support and hold the larger end of the workpiece (P).

On top of said lower plane or support (2) and coaxially located with respect to it there is the upper support (3), provided with elements or mechanisms (3.1) suited to hold the upper end of the workpiece (P).

Said upper support (3) is suited to rotate coaxially, at the same time as and in a synchronous manner with said lower plane or support (2).

The upper support (3) is provided with devices or mechanisms, not illustrated in the figure, suited to translate it vertically so as to allow its vertical position to be adapted with respect to the lower plane or support depending on the length of the workpieces (P).

The electric spindle (4) is constituted by a spindle with jaws or couplings suited to hold and rotate a machining tool, typically the bit of a milling machine.

Said electric spindle (4) is fixed and hinged to a system of moving arms (4.1) suited to support said electric spindle (4) on said structure-frame (1) in addition to translating and rotating it on the main axes.

All the moving members are controlled by a programmable electronic circuit, typically a computer, suited to detect the position of each member in addition to controlling the movement and/or the rotation of each member.

These are the schematic outlines that are sufficient to carry out the invention for a person skilled in the art, consequently, upon construction variants may be obtained that do not affect the substance as defined by the appended claims. Therefore, with reference to the above description and the attached drawings, the following claims are expressed.

## Claims

1. NC machining center for machining long and flexible workpieces, comprising a bearing structure-frame (1) supporting the various other parts and an electric spindle (4) mounted on moving arms (4.1) suited to support said electric spindle (4) on said structure-frame (1) in addition to translating and rotating it on the main axes, **characterized in that** it comprises:
- a lower plane or support (2) hinged to the lower part or base of the bearing structure-frame (1), rotating on the vertical axis, provided with elements or mechanisms (2.1) suited to hold the lower end of the workpiece (P), said lower plane or support (2) being provided with one or more mechanisms suited at least to rotate it around the vertical axis,
- an upper support (3), rotating on the vertical axis coaxially with the rotation axis of the lower plane or support (2), provided with elements or mechanisms (3.1) suited to hold the upper end of the workpiece (P), said upper plane or support (3) being provided with one or more mechanisms suited to rotate it around the vertical axis, and wherein said machining center also comprises a programmable electronic circuit suited to detect the position of all moving members in addition to
controlling the movement and/or the rotation of each moving member, and wherein said lower plane or support (2) and said upper support (3) are rotatable at the same time and in a synchronous manner, rotating in use the workpiece (P) that is fixed to them according to a vertical axis, so that the workpiece (P) is mounted and held vertically between the lower plane or support (2) and said upper support (3), without causing any flexure of the workpiece (P) itself, that is not subjected to twisting.

2. Machining center according to claim 1, **characterized in that** it comprises devices or mechanisms suited to translate the upper support (3) vertically so as to allow the vertical position of said upper support (3) to be adapted with respect to the lower plane or support (2) depending on the length of the workpieces (P).

3. Machining center according to the preceding claims, **characterized in that** it comprises a tool crib suited to contain tools and provide the electric spindle with the tool that is necessary from time to time for the specific type of machining required.

## Patentansprüche

1. NC-gesteuertes Bearbeitungszentrum zur maschinellen Bearbeitung langer und flexibler Werkstücke, einen Tragstruktur-Rahmen (1) umfassend, der die verschiedenen weiteren Teile trägt, sowie eine Elektrospindel (4) umfassend, die auf mobilen Armen (4.1) montiert ist, die geeignet sind, die besagte Elektrospindel (4) auf dem besagten Struktur-Rahmen (1) zu tragen und sie auf den Hauptachsen zu verfahren und zu drehen, **dadurch gekennzeichnet, dass** es Folgendes umfasst:
- eine untere Ebene bzw. Halterung (2), die am unteren Teil bzw. an der Basis des Tragstruktur-Rahmens (1) angelenkt ist und sich um die senkrechte Achse dreht, und mit Elementen oder Mechanismen (2.1) versehen ist, die geeignet sind, das untere Ende des Werkstücks (P) zu halten, wobei di besagte untere Ebene oder Halterung (2) mit einem oder mit mehreren Mechanismen versehen ist, die geeignet sind, sie wenigstens um die senkrechte Achse zu drehen,
- eine obere Halterung (3), die sich koaxial mit der Drehachse der unteren Ebene oder Halterung (2) um die senkrechte Achse dreht und mit Elementen oder Mechanismen (3.1) versehen ist, die geeignet sind, das obere Ende des Werkstücks (P) zu halten, wobei die besagte obere Ebene oder Halterung (3) mit einem oder mit mehreren Mechanismen versehen ist, die geeignet sind, sie um die senkrechte Achse zu drehen,
und wobei das besagte Bearbeitungszentrum des Weiteren eine programmierbare elektronische Schaltung umfasst, die geeignet ist, die Position aller Bewegungsorgane zu erfassen und zudem die Bewegung und/oder die Drehung jedes Bewegungsorgans zu steuern, und wobei die besagte untere Ebene oder Halterung (2) und die besagte obere Halterung (3) gleichzeitig und synchron gedreht werden können, und im Betrieb das an ihnen befestigte Werkstück (P) einer senkrechten Achse gemäß drehen, so dass das Werkstück (P) senkrecht zwischen der unteren Ebene bzw. Halterung (2) und der besagten oberen Halterung (3) eingespannt und gehalten wird, ohne jegliche Biegung des Werkstücks (P) selbst zu verursachen, das keiner Verdrehung unterliegt.

2. Bearbeitungszentrum nach Patentanspruch 1, **dadurch gekennzeichnet, dass** es Vorrichtungen oder Mechanismen umfasst, die geeignet sind, die obere Halterung (3) senkrecht zu verfahren, so dass die senkrechte Position der besagten oberen Halterung (3) jeweils entsprechend der Länge der Werkstücke (P) bezüglich der unteren Ebene oder Halterung (2) angepasst werden kann.

3. Bearbeitungszentrum nach vorstehenden Ansprüchen, **dadurch gekennzeichnet, dass** es ein Werkzeugmagazin umfasst, das geeignet ist, Werkzeuge zu enthalten und die elektrische Spindel mit dem von Mal zu Mal für die gewünschte Bearbeitung erforderlichen Werkzeug zu bestücken.

## Revendications

1. Centre d'usinage à contrôle numérique pour l'usinage de pièces longues et flexibles, comprenant une structure-châssis (1) indiquée à supporter et soutenir les autres pièces différentes et un mandrin électrique (4) monté sur des bras mobiles (4.1) aptes à soutenir ledit mandrin électrique (4) sur ladite structure-châssis (1) et à le faire déplacer par translation et tourner sur les axes principaux, **caractérisé en ce qu'**il comprend :
- un plan ou support inférieur (2), fixé à charnière sur la partie inférieure ou base de la structure-châssis (1) de support, tournant sur un axe vertical, ayant des éléments ou des mécanismes (2.1) aptes à retenir l'extrémité inférieure de la pièce à usiner (P), ledit plan ou support inférieur (2) étant doté d'un ou plusieurs mécanismes aptes au moins à le faire tourner autour de l'axe vertical ;
- un support supérieur (3), tournant sur l'axe vertical de manière coaxiale à l'axe de rotation du plan ou support inférieur (2), ayant des éléments ou mécanismes (3.1) aptes à retenir l'extrémité supérieure de la pièce à usiner (P), ledit plan ou support supérieur (3) étant doté d'un ou plusieurs mécanismes aptes à le faire tourner autour de l'axe vertical,
et où ledit centre d'usinage comprend également un circuit électronique programmable apte à détecter la position de tous les éléments mobiles et à contrôler le mouvement et/ou la rotation de chaque élément mobile et où ledit plan ou support inférieur (2) et ledit support supérieur (3) peuvent être tournés en mêmes temps et de manière synchrone, en tournant, durant l'utilisation, la pièce à usiner (P) qui est fixée à ceux-ci selon un axe vertical, de façon à ce que la pièce à usiner (P) soit montée et retenue verticalement entre le plan ou support inférieur (2) et ledit support supérieur (3), sans causer de flexions de la pièce à usiner (P), qui n'est pas soumise à torsion.

2. Centre d'usinage, selon la revendication 1, **caractérisé en ce qu'**il comprend des dispositifs ou mécanismes aptes à déplacer par translation le support supérieur (3) verticalement de manière à permettre l'adaptation de la position verticale dudit support supérieur (3) par rapport au plan ou support inférieur (2) selon la longueur des pièces à usiner (P).

3. Centre d'usinage selon les revendications précédentes, **caractérisé en ce qu'**il comprend un magasin à outils apte à contenir des outils et à doter le mandrin électrique de l'outil nécessaire fois par fois pour le type spécifique d'usinage requis.
